**Europäisches Patentamt**

**European Patent Office**

**Office européen des brevets**

(11) Numéro de publication: **0 057 032**
**B1**

---

(12) # FASCICULE DE BREVET EUROPEEN

(45) Date de publication du fascicule du brevet:
**11.09.85**

(51) Int. Cl.⁴: **G 01 S 5/08, G 01 C 21/20**

(21) Numéro de dépôt: **82200045.1**

(22) Date de dépôt: **15.01.82**

---

(54) **Procédé et dispositif d'aide à la navigation aérienne ou maritime.**

---

(30) Priorité: **22.01.81 FR 8101346**

(43) Date de publication de la demande:
**04.08.82 Bulletin 82/31**

(45) Mention de la délivrance du brevet:
**11.09.85 Bulletin 85/37**

(84) Etats contractants désignés:
**BE CH DE GB IT LI NL SE**

(56) Documents cités:
**DE - A - 1 548 416**
**FR - A - 2 291 479**
**GB - A - 644 864**
**GB - A - 868 398**
**US - A - 2 710 962**
**US - A - 3 882 501**
**US - A - 4 086 632**

(73) Titulaire: **Messud, Michel, Résidence Lubéron 12 Rue de Provence, F-31770 Colomiers (FR)**

(72) Inventeur: **Messud, Michel, Résidence Lubéron 12 Rue de Provence, F-31770 Colomiers (FR)**

(74) Mandataire: **Barre, Philippe, Cabinet Barre, Gatti, Laforgue 95, rue des Amidonniers, F-31069 Toulouse Cedex (FR)**

---

BUNDESDRUCKEREI BERLIN

## Description

L'invention concerne un procédé et un dispositif pour la navigation aérienne ou maritime, permettant d'élaborer et de délivrer des informations d'aide à la navigation, telles en particulier que position d'un aéronef ou d'un navire, angle de cap à suivre pour atteindre un lieu des destination, distance séparant l'aéronef ou le navire du lieu de destination. Elle vise un procédé et un dispositif, utilisant des relèvements opérés par rapport à des stations de repérage au moyen d'instruments de navigation appropriés, par exemple dans le domaine aéronautique, relèvement magnétique par rapport à une station radioélectrique (station »VOR«; station »NDB«), dans le domaine maritime, relèvements opérés par radiogoniométrie, . . .

Dans le domaine aéronautique, il existe actuellement essentiellement trois sortes d'équipements de radionavigation permettant à un pilote de définir sa position par rapport à des stations radio-électriques implantées au sol.

Les systèmes »VOR« (»VHF Omni Range«) ou »NDB-ADF« (»Non Directional Beacon-Automatic Direction Finder«) fournissent soit un relèvement magnétique par rapport à la station »VOR« soit un gisement de la station »NDB« par rapport à l'axe de l'avion. Deux mesures faites sur deux stations permettent de déterminer la position sur une carte en effectuant des traces géométriques exigeant l'emploi d'un rapporteur, d'une règle et d'une planchette support de carte.

Le système »DME« (»Distance Measuring Equipement«) fournit la distance oblique séparant l'aéronef (en altitude) de la station »DME« au sol. Combiné à un »VOR« il permet de se positionner dans les mêmes conditions que précédemment.

Le système »CLC-RNAV« (»Calculateur de Navigation de Zone«) est un calculateur associé aux appareils »VOR« et »DME« de bord; ce systéme permet de placer un »VOR-DME« fictif en tout point situé à portée radio-électrique »VHF« (donc optique) d'un »VOR-DME« réel dont la présence est indispensable. Là encore, il faut effectuer des tracés géométriques et utiliser rapporteur, règle et planchette-support de carte pour marquer la balise fictive et déterminer la position de l'aéronef.

Lorsqu'ils sont utilisés en dehors des vols réguliers effectués sur lignes à itinéraires fixes, ces systèmes présentent tous l'inconvénient majeur d'exiger, pour exploiter les données qu'ils fournissent, des opérations longues, délicates, peu pratiques à exécuter dans une cabine plus ou moins exigüe, et qui demandent au pilote une concentration que celui-ci ne peut plus réserver au pilotage; cet inconvénient est bien connu des pilotes amateurs et amène beaucoup d'entre eux à redouter de voler seuls sur des itinéraires qu'ils ne connaissent pas. En cas de vol turbulent, le relâchement de l'attention de pilotage peut affecter la sécurité de l'appareil, cependant que, dans les zones à forte densité de trafic, les risques d'abordage sont notablement plus élevés.

De plus, l'obligation de transposer par des tracés géométriques, les lectures instrumentales sur une carte, et les conditions difficiles dans lesquelles s'opère cette transposition ont pour nécessaire conséquence une imprécision assez grande des résultats obtenus; ainsi, en pratique, un pilote ne peut évaluer sa position que dans un carré de 10 km de côté ou plus. Il s'ensuit que le vol vers une destination ne se fait pas par le plus court chemin et que le pilot doit prendre des marges de sécurité importantes à proximité des zones réservées ou interdites pour être assuré de ne pas les survoler: la consommation de carburant en est notablement accrue.

En outre, l'imprécision avec laquelle est connue la position de l'aéronef peut devenir un facteur déterminant d'aggravation de risque en cas de panne ou ennui quelconque, le pilote devant user d'approximations pour rejoindre l'aérodrome le plus proche.

Par ailleurs, il est à noter que les systèmes »DME« et »CLC-RNAV« ont des inconvénients spécifiques consistant essentiellement dans les risques de saturation des stations de ce type (en cas d'interrogations multiples en nombre trop élevé), dans le petit nombre de stations existantes qui laissent de larges territoires non couverts, dans le fait que les distances indiquées sont des distances obliques, et dans le coût très élevé des équipements de bord nécessaires qui subissent des déréglages nécessitant des vérifications periodiques.

De plus, pour le système »CLC-RNAV«, un inconvénient très grave réside dans le fait qu'il faut insérer dans le système des coordonnées géographiques (7 caractères au moins pour chaque coordonnées, soit 28 caractères à insérer pour les deux balises. réelle et fictive); il en résulte des erreurs fréquentes et dangereuses, qui ont amené la plupart des pays à interdire le système »CLC-RNAV« en vol aux instruments.

Aucune solution satisfaisante n'a jusqu'à présent été proposée pour supprimer les divers inconvénients ci-dessus évoqués. Il est à noter qu'une tentative de résolution du problème a eu lieu, sans succès, en Grande Bretagne (système »G-NAV«); elle a consisté à prévoir un système de cartes spéciales de radionavigation permettant de couvrir un territoire donné; chaque carte représente une zone de ce territoire avec une projection spéciale grâce à laquelle deux stations de radio-navigation de la zone sont reportées à l'infini. La définition de la position sur la carte, après les mesures faites sur ces deux stations, s'opère par des tracés simplifiés. Toutefois, le développement d'un tel système s'est trouvé voué à l'échec pour plusieurs raisons. La plus grave est que la projection spéciale des cartes introduit d'énormes distorsons par rapport aux projections habituelles (Mercator, Lambert, projection conique . . .) de sorte qu'elle ne fournit plus pour le pilote qu'une représentation abstraite du territoire, très difficilement exploitable et ne lui permettant plus d'effectuer un contrôle rapide de la validité des données mesurées. Par exemple, les lignes droites deviennent des arcs d'hyperbole, un élément situé au Sud peut se retrouver situé plus haut qu'un élément situé plus au Nord, les angles et les distances sont totalement déformés etc. ... En particulier, en cas de panne des instruments de radionavigation, les cartes en question sont totalement inutilisables et les reports sur des cartes classiques des tracés déjà effectués sont d'exécution malaisée. Un autre inconvénient de ce système réside dans le fait que, pour chaque zone couverte par une carte, le système est entièrement basé sur deux stations de radionavigation prédéterminées: en cas de panne de l'une d'entre elles, le système devient inopérant.

Par ailleurs, il est décrit dans le brevet FR-A-2 291 479 un système de navigation qui est branché sur le récepteur VOR ou DME de l'avion afin d'acquérir directement les coordonnées géographiques nécessaires et qui est connecté au pilote automatique en vue de la commande de celui-ci.

Toutefois, ce système non autonome est extrêmement complexe et onéreux et n'est utilisable que sur des avions de ligne de gros tonnage. Il ne constitue pas une solution adaptée à des pilotes amateurs naviguant sur de petits avions (ou bateaux).

Il en est de même du système décrit dans le brevet DE-A-1 548 416 qui est branché sur le récepteur VOR ou DME de l'avion et qui travaille sur des coordonnées géographiques.

Enfin, le brevet GB 868 398 décrit un calculateur de navigation qui est associé à un système indicateur à aiguilles permettant de visualiser les résultats calculés par celui-ci. Ce dispositif présente l'inconvénient déjà mentionné d'impliquer l'usage de la règle et du rapporteur, ce qui est extrêmement peu commode dans une cabine exigüe. En outre, s'il peut donner le cap à suivre et la distance restant à parcourir, il est totalement inapte à fournir la position de l'aéronef.

La présente invention se propose d'indiquer une solution satisfaisante permettant à un pilote de connaître sa position de façon pratique, rapide et précise, au moyen d'un dispositif peu onéreux et d'utilisation simple.

Un autre objectif est de permettre au pilote de déterminer, dans les mêmes conditions, le cap à suivre pour atteindre une destination.

Un autre objectif de l'invention est également de fournir au pilote, dans les mêmes conditions de précision, la distance qui le sépare d'un lieu de destination, sans avoir à utiliser dans le domaine aéronautique les stations »DME«, de façon à s'exempter totalement des défauts spécifiques de ce système (et en particulier des risques de saturation).

Un autre objectif est de fournir également au pilote d'autres informations d'aide à la navigation, telles par exemple que direction et vitesse du vent réel.

Un autre objectif est d'indiquer un procédé et un dispositif permettant d'élaborer et de délivrer ces informations, au moyen des cartes habituellement utilisées dans le domaine concerné, cartes aéronautiques courantes pour la navigation aérienne ou cartes maritimes pour la navigation maritime.

Un autre objectif est d'indiquer un procédé et un dispositif utilisant les relèvements opérés au moyen d'instruments appropriés par rapport à des stations de repérage quelconques, par exemple n'importe quelle station de radionavigation située dans la zone couverte par la carte utilisée (ou le cas échéant située proche de cette zone).

A cet effet, le procédé visé par la présente invention pour la navigation aérienne ou maritime, permettant d'élaborer et de délivrer des informations d'aide à la navigation relatives à la position d'un aéronef ou d'un navire, à partir de relèvements opérés par rapport à des stations de repérage au moyen d'instruments de navigation appropriés, notamment relèvements de stations de radio-navigation opérés au moyen d'instruments de radio-navigation, en utilisant un plateau dit plateau de navigation sur lequel est positionnée une carte géographique correspondant à la région de navigation concernée, ladite carte portant l'indication des stations de repérage existant sur l'aire qu'elle couvre, consiste:

— à étalonner le plateau de navigation, de façon à repérer chaque point du plateau par des coordonnées conventionnelles dans un système de référence lié audit plateau,
— à choisir sur la carte fixée sur le plateau deux stations de repérage et à lire les coordonnées conventionnelles $(X_1, Y_1; X_2, Y_2)$ de ces deux stations de repérage dans le système de référence dont est étalonné le plateau,
— à actionner manuellement un clavier d'entrée de données comportant une pluralité de touches en vue de générer des signaux électriques représentatifs de ces coordonnées conventionnelles $(X_1, Y_1; X_2, Y_2)$ et à mémoriser lesdits signaux,
— à mesurer et lire les relèvements $(R_1, R_2)$ de ces deux stations de repérage au moyen des instruments de navigation appropriés,
— à actionner manuellement le clavier d'entrée de donnée, en vue de générer des signaux électriques représentatifs de ces relèvements $(R_1, R_2)$ et à mémoriser ces signaux,
— à générer à partir des signaux électriques représentatifs des coordonnées conventionnelles $(X_1, Y_1; X_2, Y_2)$ des deux stations de repérage et des relèvements mesurés $(R_1, R_2)$, des signaux électriques représentatifs des coordonnées conventionnelles $(X, Y)$ de la position de l'aéronef ou du navire dans le système de référence lié au plateau de navigation,
— à afficher lesdites coordonnées conventionnelles $(X, Y)$ et à repérer sur la carte fixée sur le plateau

3

de navigation la position de l'aéronef ou du navire au moyen desdites coordonnées conventionnelles et du système de référence lié au plateau.

De plus, selon une autre caractéristique de l'invention permettant d'élaborer et de délivrer des
informations relatives au cap à suivre (Rm) pour atteindre un lieu de destination donné, le procédé
consiste également:

— à lire sur le plateau les coordonnées conventionnelles (x, y) du lieu de destination,
— à générer des signaux électriques représentatifs de ces coordonnées (x, y) et à mémoriser lesdits
signaux,
— à générer à partir des signaux représentatifs des coordonnées conventionnelles des deux stations
de repérage ($X_1$, $Y_1$; $X_2$, $Y_2$), du lieu de destination (x, y) et des relèvements mesurés ($R_1$, $R_2$), un
signal électrique représentatif de l'angle de cap à suivre (Rm),
— à afficher ledit angle de cap.

Le signal représentatif de l'angle de cap (Rm) peut être généré directement en utilisant les données
($X_1$, $Y_1$; $X_2$, $Y_2$; x, y; $R_1$, $R_2$). Il peut également être généré indirectement à partir de ces données, en
utilisant le résultat des calculs de position (X, Y) et certaines des données ci-dessus (x, y); ce dernier
mode de génération sera préféré en pratique car les opérations logiques à effectuer sur les signaux
correspondants sont notablement simplifiées dans ce cas.

Selon une autre caractéristique de l'invention, on génère également à partir des signaux sus-évoqués (utilisés directement ou, de préférence, sous la form de résultats déjà obtenus) un signal
électrique représentatif de la distance (D) séparant l'aéronef ou le navire du lieu de destination et on
affiche cette distance.

Par ailleurs, selon une autre caractéristique, le procédé conforme à l'invention vise également à
élaborer et délivrer pour la navigation aérienne des informations relatives à la direction (r) et à la
vitesse (v) du vent réel; conformément à l'invention, après détermination de la positon (X, Y) de
l'aéronef et du cap (Rm):

— on choisit sur la droite de relèvement calculé (Rm) une destination intermédiaire ($x_i$, $y_i$) correspondant à un temps de parcours connu (t) à partir de la position de l'aéronef (X, Y),
— on effectue à nouveau des mesures au bout de ce temps (t) de façon à générer des signaux
électriques représentatifs de la nouvelle position de l'aéronef (X', Y'), du nouveau relèvement
(R'm) de la destination intermédiaire ($x_i$, $y_i$) et de la distance (D') de cette destination par rapport
à la nouvelle position,
— on génère un signal représentatif du temps (t) on effectue des opérations algébriques et trigonométriques sur les signaux précités afin de générer des signaux représentatifs de la direction du
vent (r = R'm ± 180° ) et de la vitesse du vent
$(v = \dfrac{D'}{t} \cdot k$, k étant un coefficient dépendant des unités),
— on affiche cette direction (r) et cette vitesse (v).

Le procédé de l'invention utilise des cartes classiques, dont l'échelle est indifférente. En effet, il
consiste à superposter à la carte un système conventionnel de coordonnées à partir duquel sont
opérés aussi bien la lecture des coordonnées d'une station, que le repérage d'une position; il suffit,
pour une mesure donnée, que la carte reste la même et demeure dans une position inchangée par
rapport au plateau, le type de carte et son échelle pouvant être quelconque.

Le pilot peut notamment utiliser des cartes classiques qu'il aura lui-même préalablement découpées pour faciliter leur positionnement sur le plateau de navigation; pour éviter cette opération de
découpage, un jeu de cartes pré-découpées à la forme du plateau et couvrant un territoire déterminé
lui sera de préférence fourni, ces cartes étant du type habituellement utilisé (projection et échelle) de
façon que le pilote puisse facilement suivre son parcours au fur et à mesure de sa progression. Bien
entendu sur chaque carte, sont portées les stations de repérage avec leurs caractéristiques. Notons
que, le cas échéant, chaque carte peute être éditée avec des lignes de référence correspondant au
système de référence lié au plateau de façon à faciliter encore les lectures ou repérages, une fois la
carte positionnée sur le plateau.

La détermination sur la carte d'une position s'effectue sans aucun tracé géométrique par de simple
lectures et repérages: lecture des coordonnées conventionnelles des deux stations de repérage
choisies (soit par lecture d'une abscisse et d'une ordonnée au moyen du système de référence du
plateau, soit par lecture directe de chiffres écrits sur la carte à côté de la station pour les cartes faisant
partie d'un jeu édité spécialement), repérage de la position sur la carte au moyen du système du
référence du plateau à partir des coordonnées conventionnelles calculées. Une telle détermination
écarte toutes les sources d'erreurs ou d'imprécisions des systèmes classiques et permet une localisation très précise de l'aéronef ou du navire qui n'est limitée que par la précision des instruments de
radionavigation qui permettent d'opérer les relèvements. Les autres informations d'aide à la navigation fournies (cap, distance . . .) le sont dans les mêmes conditions de précision.

De plus, le pilote peut utiliser pour chaque mesure, indifféremment n'importe quelle station et la panne de l'une ou plusieurs d'entre elles ne neutralisent pas le système. Dans le cas de mesures successives utilisant les mêmes stations, le procédé se simplifie encore puisqu'il n'est plus nécessaire de lire les coordonnées de celles-ci.

Dans le domaine aéronautique, les stations utilisées seront de préférence des stations de radio-navigation »VOR« ou »NDB« qui sont largement répandues et ne présentent pas de risques de saturation.

En outre, il est essentiel de remarquer que toutes les opérations du procédé s'effectuent en utilisant des coordonnées conventionnelles qui sont caractéristiques du système conforme à l'invention et définies par le système de référence lié au plateau. Ce système de référence, constitué de préférence par deux axes perpendiculaires gradués, peut être choisi de sorte que chaque point du plateau soit représenté par deux coordonnées conventionnelles de trois ou quatre chiffres chacune selon la taille de plateau; quatre chiffres par coordonnée est un maximum qui ne sera pas dépassé en pratique et qui fournit une précision de représentation très largement suffisante. On supprime ainsi les sources d'erreur et de complication des systèmes classiques qui utilisent des coordonnées géographiques. En effet, le nombre des chiffres à lire et à composer sur un clavier est limité dans le cas de l'invention et l'utilisateur a constamment sous les yeux (au niveau du plateau) le système de référence par rapport auquel il travaille.

L'invention s'étend à un dispositif d'aide à la navigation adapté pour permettre la mise en oeuvre du procédé precité; ce dispositif, comportant un plateau dit plateau de navigation pourvu de moyens de positionnement d'une carte géographique et des moyens de calcul adaptés pour effectuer des opérations de calculs algébriques et/ou trigonométriques, comprend:

— un système d'étalonnage dudit plateau permettant de repérer chacun de ses points par des coordonnées conventionnelles dans un système de référence lié audit plateau,
— un système d'entrée de données comportant un clavier à touches et adapté pour permettre de générer des signaux électriques représentatifs de coordonnées conventionnelles ou relèvements et de transmettre ces signaux vers les moyens de calcul en vue d'élaborer des signaux électriques représentatifs des coordonnées conventionnelles d'une position $(X, Y)$ et, le cas échéant d'un angle de cap $(Rm)$ et/ou d'un distance $(D)$,
— et des moyens d'affichage pour la visualisation des résultats issus des moyens de calcul.

Selon un mode de réalisation préféré, le système d'entrée des données comprend un clavier disposé en bordure du plateau de navigation et pourvu d'une pluralité de touches, qui sont marquées, d'une part, de signes d'identification de la nature des données à entrer (station 1: $X_1 Y_1 R_1$, station 2: $X_2 Y_2 R_2$, destination: $x\ y$), d'autre part, d'indications numériques pour la composition des divers chiffres de chaque donnée.

Les touches de fonction correspondant à la nature des données et les touches numériques peuvent être des touches séparées disposées à des emplacements différents du clavier ou bien des touches communes assurant les deux rôles.

Les moyens d'affichage sont, de préférence, composés de plusieurs afficheurs à segments et de moyens d'indication du type d'informations affichées $(X, Y, Rm, D . . .)$.

Selon un mode de réalisation préféré, les afficheurs à segments sont en faible nombre, de l'ordre de 5 à 6, et ont une fonction d'affichage universel d'informations de toute nature; les moyens d'indication du type d'informations affichées sont alors constitués par des moyens lumineux tels que plusieurs diodes électroluminescentes, qui permettent de visualiser le type d'informations affichées.

Il est également possible de prévoir plusieurs séries d'afficheurs à segments, chaque série correspondant à un type d'informations données, avec inscription en marge de la série du type d'informations concernées.

Par ailleurs, les moyens de calcul du dispositif comprennent avantageusement un micro-calculateur doté d'une unité de calcul, d'une mémoire morte pour stocker un programme de calcul, d'une mémoire vive pour stocker des données renouvelables, et d'interfaces interposées entre l'unité de calcul et les mémoires ou les moyens d'affichage.

Le dispositif de l'invention peut comporter ses propres moyens d'alimentation électrique et être entièrement autonome et indépendant de l'aéronef (ou du navire). Il peut également être branché par une connection appropriée sur les batteries de l'aéronef. Le prix d'un tel dispositif est très modéré et se trouve par exemple plus de 30 fois inférieur à un équipement »CLC-RNAV«, alors qu'il n'en présente pas les inconvénients et rend davantage de services que celui-ci.

L'invention qui a été exposée ci-dessus dans sa forme générale, sera mieux comprise à la lecture de la description qui suit et à l'examen des dessins annexés, qui en présentent un exemple d'application dans le domaine aéronautique; sur ces dessins:

la figure 1 est une vue schématique en perspective d'un dispositif conforme à l'invention,
la figure 2 en est une coupe par un plan transversal A,
la figure 3 en est une coupe de détail par un plan B perpendiculaire au précédent,
la figure 4 est un schéma synoptique présentant les moyens de calcul du dispositif,

la figure 5 est une vue en perspective schématique de cartes susceptibles d'équiper le dispositif,

la figure 6 est une vue schématique en plan du dispositif muni d'une carte, en vue d'illustrer la mise en oeuvre du procédé conforme à l'invention.

Le dispositif d'aide à la navigation représenté à titre d'exemple aux figures est constitué par un boîtier 1 de faible épaisseur et de forme générale rectangulaire, délimitant un plateau plat 2, rectangulaire ou carré, dit plateau de navigation, qui s'étend sur la plus grande partie de la surface du boîtier.

Ce plateau de navigation 2 est situé légèrement en retrait par rapport à une bordure périphérique 3 légèrement en saillie en vue de délimiter un logement dans lequel est apte à se positionner une carte, les bords de celle-ci venant au contact de la bordure 3 de façon à lui conférer une position précise invariable par rapport au plateau 2. En l'exemple, la bordure périphérique 3 est interrompue par deux échancrures 3a, 3b pour le passage d'onglets d'identification des cartes.

Sur un côté (4) du plateau 2, le boîtier 1 forme un support pour un système d'entrée de donnée et pour des moyens d'affichage, qui seront décrits plus loin; en outre, il permet de loger des moyens de calcul que comporte le dispositif ainsi que des moyens d'alimentation électrique des divers ensembles électroniques.

Le plateau de navigation 2 est pourvu d'un système d'étalonnage, consistant en un système de deux axes (X, Y) perpendiculaires entre eux, chaque axe étant parallèle à un bord du plateau et gradué à partir d'une origine.

L'un des axes (X) est porté par un bord 5 du plateau et est gradué à partier d'une origine situé à proximité de l'extrémité gauche de ce bord.

L'autre axe (Y) est porté par un curseur mobile 6 qui s'étend perpendiculairement au bord 5 sur toute la hauteur du plateau; ce curseur est gradué à partir d'une origine située à sa partie inférieure au voisinage du bord 5.

Les graduations des axes X et Y sont conventionnelles et peuvent être quelconques; toutefois, on utilise de préférence des graduations possédant une même échelle sur les deux axes et qui représentent les unités de distance les plus usuellement utilisées dans le domaine concerné, à l'échelle des cartes les plus couramment employées. En particulier, le mile nautique (NM) ($=1,852$ km) est en général l'unité de distance utilisée en aéronautique et l'échelle des cartes les plus courantes est égale à 1/1 000.000e; dans ces conditions, la longueur de chaque graduation est de préférence égale à 1,852 mm. Ce choix fournit un avantage d'ordre pratique pour l'usager puisqu'il lui permet de disposer à tout instant sous les yeux d'une échelle des distances correspondant aux cartes les plus couramment utilisées.

En outre, pour un plateau 2 ayant des dimensions de l'ordre de 25 à 30 cm sur 15 à 20 cm, chaque coordonnée est représentée avec une excellente précision à l'aide de quatre chiffres au plus (exemple $X=120,3$). Une telle dimension de plateau constitue un excellent compromis qui, à la fois, assure une grande facilité d'utilisation et de manipulation du dispositif (provenant d'un encombrement relativement faible) et permet à chaque carte, de couvrir une surface de territoire satisfaisante (environ 150 NM sur 100 NM) évitant des changements de cartes trop fréquents.

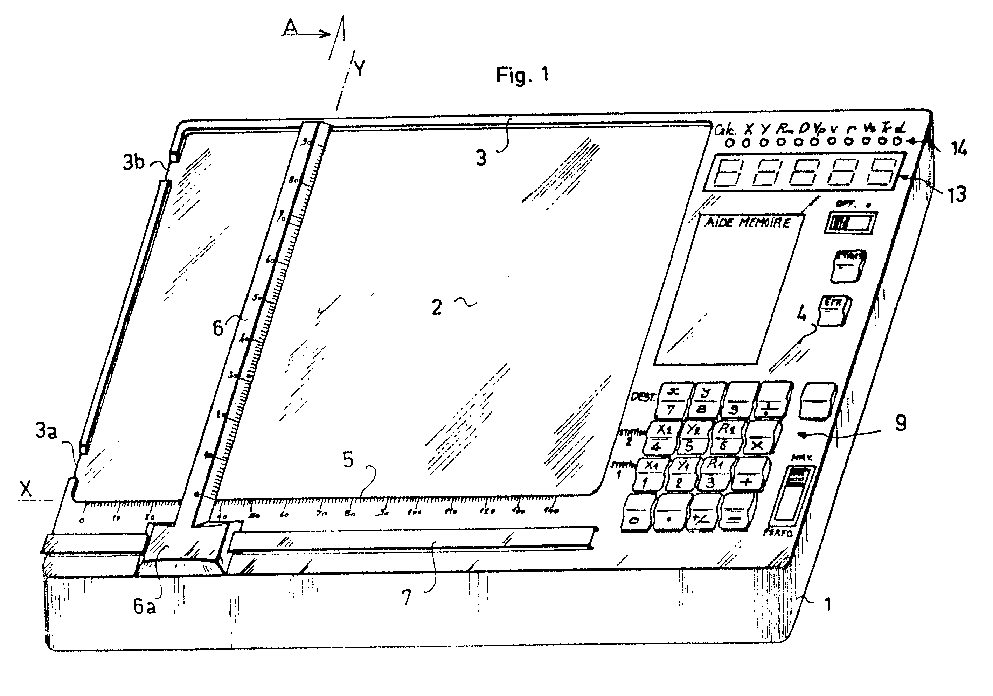

Comme le montrent les figures 1, 2 et 3, le curseur 6 est associé à des moyens de guidage en translation, adaptés pour permettre de le déplacer parallèlement au bord 5 sur toute la longueur de celui-ci; en l'exemple, ces moyens sont constitués par une glissière 7 prévue le long du bord 5, avec laquelle coopère le pied 6a du curseur, format coulisseau. De petites lâmes élastiques 8 autorisent le déplacement du curseur 6 sans risque de coincement, tout en préservant la perpendicularité de celui-ci par rapport au bord 5.

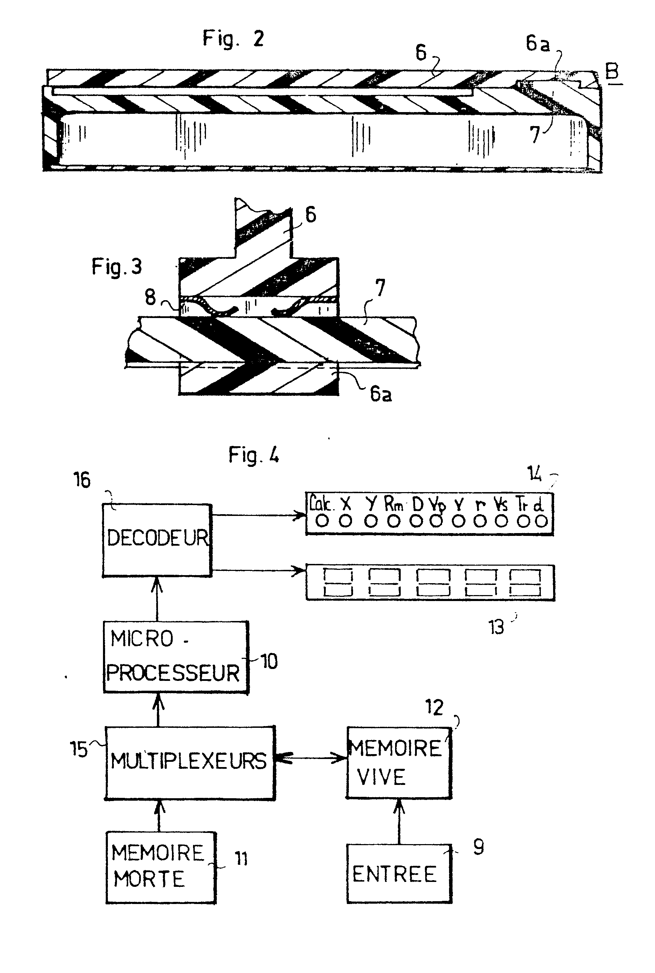

Par ailleurs, le dispositif comprend un ensemble électronique dont le schéma synoptique est fourni à la figure 4. Celui-ci est essentiellement constitué par un système d'entrée de données 9, une unité de calcul 10 constituée en l'exemple par un microprocesseur, une mémoire morte 11 (»ROM«) pour stocker un programme de calcul, une mémoire vive 12 (»RAM«) pour stocker les données renouvelables provenant du système d'entrée 9, des moyens d'affichage 13 et 14 des résultats et des interfaces 15 et 16 interposées entre l'unité de calcul 10 et les mémoires 11 et 12 ou les moyens d'affichage 13 et 14; de façon classique, ces interfaces sont en l'exemple constituées par des multiplexeurs et décodeurs.

Le système d'entrée de données 9 est adapté pour permettre de générer des signaux électriques représentatifs des données qui sont composées sur un clavier que comprend ce système. Ce clavier est pourvu d'une pluralité de touches portées par le bord 4 du boîtier.

En l'exemple, il comprend des touches numériques et des touches de fonction communes. Les touches numériques permettant de composer les chiffres d'une donnée (abscisse, ordonnée, relèvement) en leur affectant le cas échéant un signe (dont on verra l'utilité plus loin); certaines de ces touches font également office de touches de fonction et permettent d'affecter un code caractéristique de la nature de la donnée. Ces touches de fonction sont en l'exemple essentiellement au nombre de huit: abscisse conventionnelle x et ordonnée conventionnelle y du lieu de destination à atteindre, abscisse $X_1$, ordonnée $Y_1$ de la première station, relèvement $R_1$ mesuré par rapport à cette première station, abscisse $X_2$, ordonnée $Y_2$ et relèvement $R_2$ de la seconde station. Comme le montre la figure 1, ces touches de fonction sont marquée de signes d'identification appropriés.

En outre, le clavier comprend, de façon classique, diverses touches, telles que touche de commande d'un calcul, touche d'effacement, touche de mise en mémoire (ou stockage), ainsi qu'un interrupteur d'alimentation électrique, et un sélecteur NAVIGATION/PERFORMANCE qui permet, soit d'activer le programme de navigation, soit de disposer les moyens de calcul en état d'effectuer d'autres calculs à partir de données spécifiques ou de certains résultats des calculs de navigation (calcul de la vitesse de l'avion, de la vitesse sol, du temps réel nécessaire pour atteindre un lieu de destination, de la dérive etc. . . .). On ne donnera pas plus de détail sur les programmes de calculs correspondants, classiques en soi.

Par ailleurs, les moyens d'affichage portés par le bord 4 du boîtier comprennent, en l'exemple, cinq afficheurs 13 à sept segments, en vue d'afficher les différents chiffres d'une information-résultat et un ensemble 14 de plusieurs diodes luminescentes correspondant chacune à la nature d'une information-résultat.

En marge de chaque diode (qui s'allume lorsque le résultat s'inscrivant sur les afficheurs 13 correspond à celle-ci) est marquée d'indication du type d'information concernée, en l'exemple: Calc. (insertion de données), X (abscisse conventionnelle calculée de la position), Y (ordonnée de la position), Rm (cap du lieu de destination), D (distance du lieu de destination, v (vitesse du vent), r (direction du vent) et diverses informations complémentaires précitées susceptibles d'être calculées par les moyens de calcul ($V_p$: vitesse de l'avion, $V_s$: vitesse sol, $T_r$: temps réel pour atteindre une destination, d: dérive).

Le programme de navigation qui est mémorisé dans la mémoire morte 11 est adapté pour gérer l'exécution des divers calculs de navigation à effectuer, essentiellement: calcul des coordonnées conventionnelles X et Y à partir des coordonnées et relèvements des deux stations $X_1$, $Y_1$, $R_1$, $X_2$, $Y_2$, $R_2$, calcul du cap Rm à partir des coordonnées calculées X, Y et des coordonnées x et y du lieu de destination, enfin calcul de la distance D à partir des coordonnées calculées X, Y et des coordonnées x et y.

Ces calculs peuvent être effectués par application des formules suivantes, à partir desquelles est établi le programme de navigation:

$$X = \frac{\operatorname{tg} R_1 \cdot \operatorname{tg} R_2 (Y_2 - Y_1) + X_1 \operatorname{tg} R_2 - X_2 \operatorname{tg} R_1}{\operatorname{tg} R_2 - \operatorname{tg} R_1}$$

$$Y = \frac{-X_2 + X_1 - Y_1 \operatorname{tg} R_1 + Y_2 \operatorname{tg} R_2}{\operatorname{tg} R_2 - \operatorname{tg} R_1}$$

$$Rm = \left[ \operatorname{Arc} \operatorname{tg} \frac{x - X}{y - Y} \right]^{\circ} + 90 \cdot \left[ 2 - \frac{x - X}{\sqrt{(x - X)^2}} \left( 1 + \frac{y - Y}{\sqrt{(y - Y)^2}} \right) \right]$$

$$D = K \cdot \sqrt{(X - x)^2 + (Y - y)^2}$$

Pour le calcul de la distance D, le coefficient K est un coefficient tenant compte de l'échelle des cartes utilisées, de l'étalonnage du plateau 2 et de l'unité dans laquelle le pilot désire que la distance soit exprimée.

Dans l'exemple évoqué plus haut (échelle: 1/1 000.000e, étalonnage à la même échelle: 1 mm par km, unité de distance: mile nautique), ce coefficient est égal à 1,0799.

Le dispositif de l'invention est de préférence équipé d'un jeu de cartes plastifiées éditées spécialement, qui couvrent un territoire donné divisé en régions correspondant chacune à une carte. Par exemple, le territoire français peut être représenté par environ 20 à 25 cartes au 1/1 000.000e, imprimées recto-verso sur des supports en papier plastifié (représentant un jeu de 10 à 15 support qui peuvent être stockés sous le plateau 2 à l'intérieur du boîtier).

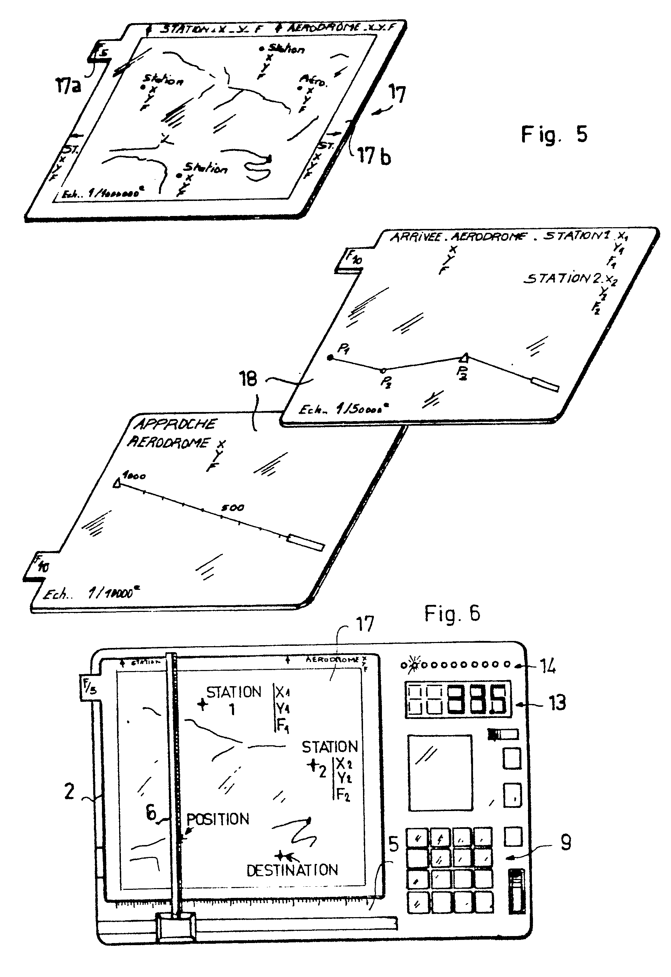

Chaque carte telle que carte 17 schématisée à la figure 5, comprend un onglet d'identification 17a portant des indications, recto-verso, propres à faciliter le choix de la carte qui correspond à la région de navigation. Les dimensions des cartes correspondent à celles du plateau de navigation 2.

Elles portent toutes les indications géographiques classiques, avec les stations de radionavigation »VOR« ou »NDB« de la région et les aérodromes. Pour chaque station, la carte porte l'indication de la fréquence d'émission de celle-ci et de préférence, l'indication inscrite en chiffres de ses coordonnées conventionnelles ce qui permet une lecture directe sans utiliser le curseur 6. De même, les coordonnées conventionnelles de chaque aérodrome (ou des aérodromes principaux de la région) peuvent également être inscrites sur la carte dans le même but.

De plus, la carte peut être dotée d'une marge périphérique telle que 17b, dans laquelle sont notées les stations de radionavigation »VOR« ou »NDB« proches de la région couverte par la carte, avec leur fréquence et leurs coordonnées conventionnelles. On peut ainsi prendre des relèvements par rapport à des stations situées en dehors de la carte, ce qui peut, dans certains cas, éviter des changements de cartes; l'abscisse ou l'ordonnée de telles stations peut être négative et la donnée est affectée du signe correspondant grâce à la touche appropriée du clavier.

En outre, le jeu de cartes peut être complété par des cartes telles que 18 d'arrivée vers les aérodromes et d'approche de ceux-ci. Pour chaque aérodrome, la carte d'arrivée est imprimée au recto et la carte d'approche au verso du même support. L'échelle de l'une peut être de 1/50.000e et celle de l'autre 1/10.000e. Chacune de ces cartes porte les coordonnées conventionnelles de l'aérodrome et la trajectoire recommandée d'arrivée ou d'approche de l'aérodrome (avec les diverses caractéristiques de vol conseillées). Bien entendu, ces cartes portent également l'indication de deux stations »VOR« ou »NDB«, à portée radio de l'aérodrome, avec leurs caractéristiques.

On a représenté à la figure 6 une vue schématique en plan du dispositif, en vue d'illustrer le procédé conforme à l'invention.

Celui-ci consiste à sélectionner la carte 17 correspondant à la région survolée et à positionner celle-ci sur le plateau 2 dans le logement délimité par les bordures en saillie dudit plateau.

Deux stations »VOR« et/ou »NDB« sont ensuite choisies sur la carte et leurs coordonnées conventionnelles sont lues sur celle-ci. Dans le cas visé où ces coordonnées sont notées sur la carte, une simple lecture directe suffit. Il est à noter que ces coordonnées sont, non pas des coordonnées géographiques mais des coordonnées conventionnelles à 4 chiffres au plus, prises dans le système d'axe lié au plateau (axe du bord 5 et axe du curseur 6).

Dans le cas où ces coordonnées ne sont pas indiquées sur la carte (carte classique découpée par le pilote), la lecture de celles-ci consiste simplement à faire coulisser le curseur 6 parallèlement au bord 5 en vue de l'amener à passer par la station (ou plus généralement par le point concerné) et à lire une des coordonnées sur le curseur au niveau du point concerné (ordonnée) et l'autre sur le bord 5 au niveau du pied du curseur.

Les coordonnées $(X_1, Y_1)$ $(X_2, Y_2)$ des deux stations sont insérées dans la mémoire de stockage 12, en les composant sur le clavier 9 qui les traduit sous forme de signaux électriques codés.

Le pilote mesure ensuite de façon classique les relèvements $(R_1, R_2)$ des deux stations »VOR« ou »NDB« au moyen des instruments de radio-navigation »VOR« ou »ADF« de l'avion et insère ces relèvements dans la mémoire 12.

Il lui suffi ensuite de déclencher le calcul pour obtenir les coordonnées conventionnelles X, Y de la position de l'avion. Les opérations logiques sont exécutées sur les signaux électriques représentatifs des données conformément à la formule indiquée plus haut et fournissent des signaux représentatifs des coordonnées X, Y qui sont successivement affichés sur les afficheurs 13 avec éclairement des diodes correspondantes.

Le pilote repère alors sur la carte la position de l'aéronef au moyen des coordonnées lues sur les afficheurs. Il lui suffit de faire coulisser le curseur 6 en vue d'amener son pied sur la graduation correspondant à l'abscisse lue X et à repérer le point correspondant à la position, le long du curseur en regard de la graduation correspondant à l'ordonnée lue Y.

On conçoit le caractère extrêmement simple et pratique des opérations qui sont demandées au pilote, opérations qui n'exigent aucun tracé géométrique.

Pour obtenir le cap à suivre Rm pour atteindre un lieu de destination, les opérations se déroulent de façon similaire: lecture des coordonnées x, y de ce lieu au moyen du curseur 6, entrée de ces données sur le clavier 9, déclenchement du calcul selon la formule déjà indiquée utilisant les coordonnées de la position X, Y mises en mémoire à l'issu du calcul précédent, lecture du relèment Rm sur les afficheurs 13 avec identification de la nature de l'information lue par éclairement de la diode correspondante.

Pour obtenir la distance D séparant l'avion du lieu de destination, aucune nouvelle donnée n'est à insérer; le calcul correspondant s'effectue selon la formule déjà indiquée à partier de la position (X, Y) et du lieu de destination (x, y), le coefficient K étant préalablement mis en mémoire.

Lorsque le pilot veut refaire un point sans avoir changé de région de navigation, il lui suffit d'insérer les nouveaux relèvements mesurés par rapport aux mêmes stations, ce qui lui fournit à nouveau des informations précises sur sa positions, le cap à suivre et la distance qui le sépare du lieu de destination.

De plus, il est aisé, au moyen du dispositif de l'invention, de déterminer la direction r et la vitesse v du vent réel agissant sur l'avion, en connaissant la vitesse de ce dernier.

Après avoir fait une première mesure de position (X, Y) et de relèvement (Rm), le pilote choisit sur la droite de relèvement calculé Rm, une destination intermédiaire $(x_i, y_i)$ correspondant à un temps de parcours connu t à partir de la position initiale (X, Y) (par exemple 5 minutes).

Au bout de ce temps, il détermine le nouveau cap R'm à suivre pour atteindre cette destination intermédiaire $(x_i, y_i)$ et la distance D' qui le sépare de celle-ci.

La direction r du vent se déduit du nouveau cap R'm $(r = R'm \pm 180°)$ et la vitesse du vent se déduit de la distance D' et du temps t

$$\left( v = \frac{D'}{t} \cdot k \right).$$

Un programme correspondant à ces calculs est stocké dans la mémoire 11 afin d'assurer un affichage direct de ces informations sur les afficheurs 13 (k étant un coefficient dépendant des unités).

On conçoit l'intérêt de l'invention qui permet de fournir au pilote les informations essentielles d'aides à la navigation dont il a besoin, au moyen d'un dispositif peu onéreux, et au terme d'opérations d'exécution rapide et simple, parfaitement compatibles avec la pratique attentive du pilotage.

## Revendications

1. Procédé pour la navigation aérienne ou maritime, permettant d'élaborer et de délivrer des informations d'aide à la navigation relatives à la position d'un aéronef ou d'un navire, à partir de relèvements (R) opérés par rapport à des stations de repérage au moyen d'instruments de navigation appropriés, notamment relèvements de stations de radio-navigation opérés au moyen d'instruments de radio-navigation, ledit procédé utilisant un plateau (2) dit plateau de navigation sur lequel est positionnée une carte géographique (17, 18) correspondant à la région de navigation concernée, ladite carte portant l'indication des stations de repérage existant sur l'aire qu'elle couvre, ledit procédé étant caractérisé en ce qu'il consiste:

— à étalonner le plateau de navigation (2), de façon à repérer chaque point du plateau par des coordonnées conventionnelles dans un système de référence lié audit plateau,
— à choisir sur la carte fixée sur le plateau deux stations de repérage et à lire les coordonnées conventionnelles $(X_1, Y_1; X_2, Y_2)$ de ces deux stations de repérage dans le système de référence dont est étalonné le plateau,
— à actionner manuellement un clavier d'entrée de données (9) comportant une pluralité de touches en vue de générer des signaux électriques représentatifs de ces coordonnées conventionnelles $(X_1, Y_1; X_2, Y_2)$ et à mémoriser (en 12) lesdits signaux,
— à mesurer et lire les relèvements $(R_1, R_2)$ de ces deux stations de repérage au moyen des instruments de navigation appropriés,
— à actionner manuellement le clavier d'entrée de donnée (9), en vue de générer des signaux électriques représentatifs de ces relèvements $(R_1, R_2)$ et à mémoriser (en 12) ces signaux,
— à générer à partir des signaux électriques représentatifs des coordonnées conventionnelles $(X_1, Y_1; X_2, Y_2)$ des deux stations de repérage et des relèvements mesurés $(R_1, R_2)$, des signaux électriques représentatifs des coordonnées conventionnelles (X, Y) de la position de l'aéronef ou du navire dans le système de référence lié au plateau de navigation,
— à afficher (en 13, 14) lesdites coordonnées conventionelles (X, Y) et à repérer sur la carte fixée sur le plateau de navigation la position de l'aéronef ou du navire au moyen desdites coordonnées conventionnelles et du système de référence lié au plateau.

2. Procédé selon la revendication 1, permettant d'élaborer et de délivrer des informations relatives au cap à suivre (Rm) pour atteindre un lieu de destination donné, caractérisé en ce qu'il consiste:

— à lire sur le plateau les coordonnées conventionnelles (x, y) du lieu de destination,
— à générer (par 9) des signaux électriques représentatifs de ces coordonnées (x, y) et à mémoriser (en 12) lesdits signaux,
— à générer à partir des signaux représentatifs des coordonnées conventionnelles des deux stations de repérage $(X_1, Y_1; X_2, Y_2)$, du lieu de destination (x, y) et des relèvements mesurés $(R_1, R_2)$ un signal électrique représentatif de l'angle de cap à suivre (Rm),
— à afficher (en 13, 14) ledit angle de cap.

3. Procédé selon l'une des revendications 1 ou 2, permettant d'élaborer et de délivrer des informations relatives à la distance (D) séparant l'aéronef ou le navire d'un lieu de destination donné, caractérisé en ce qu'il consiste:

— à lire sur le plateau les coordonnées conventionnelles (x, y) du lieu de destination,
— à générer (par 9) des signaux électriques représentatifs de ces coordonnées (x, y) et à mémoriser (en 12) lesdits signaux,
— à générer à partir des signaux représentatifs des coordonnées conventionnelles $(X_1, Y_1; X_2, Y_2)$ des deux stations de repérage, du lieu de destination (x, y) et des relèvements mesurés $(R_1, R_2)$, un signal électrique représentatif de la distance (D) séparant l'aéronef ou le navire du lieu de destination,
— à afficher (en 13, 14) ladite distance.

4. Procédé selon les revendications 1, 2 et 3 prises ensemble permettant d'élaborer et de délivrer pour la navigation aérienne des informations relatives à la direction (r) et à la vitesse (v) du vent réel, caractérisé en ce qu'il consiste:

- à choisir sur la droite de relèvement calculé (Rm) une destination intermédiaire ($x_i$, $y_i$) correspondant à un temps de parcours connu (t) à partir de la position de l'aéronef (X, Y),
- à effectuer à nouveau des mesures au bout de ce temps (t) de façon à générer des signaux électriques représentatifs de la nouvelle position de l'aéronef (X', Y'), du nouveau relèvement (R'm) de la destination intermédiaire ($x_i$, $y_i$) et de la distance (D') de cette destination par rapport à la nouvelle position,
- à générer un signal représentatif du temps (t) et à effectuer des opérations algébriques et trigonometriques sur les signaux précités afin de générer des signaux représentatifs de la direction du vent ($r = R'm \pm 180°$) et de la vitesse du vent

$$(v = \frac{D'}{t} \cdot k, \text{ k étant un coefficient dépendant des unités}),$$

- à afficher (en 13, 14) cette direction (r) et cette vitesse (v).

5. Procédé selon l'une des revendications 1, 2, 3 ou 4, caractérisé en ce que l'on étalonne le plateau de navigation (2), de forme sensiblement rectangulaire, sur deux axes perpendiculaires entre eux, chaque axe étant parallèle à un bord du plateau et gradué à partir d'une origine.

6. Procédé selon les revendications 1 et 5 prises ensemble, caractérisé en ce que l'on génère les signaux représentatifs des coordonnées (X, Y) de la position de l'aéronef ou du navire, en effectuant les opérations de calculs algébriques et trigonometriques suivantes sur les signaux représentatifs des coordonnées conventionnelles des deux stations de repérage ($X_1$, $Y_1$; $X_2$, $Y_2$) et des relèvements mesurés ($R_1$, $R_2$):

$$X = \frac{\text{tg } R_1 \cdot \text{tg } R_2 (Y_2 - Y_1) + X_1 \text{ tg } R_2 - X_2 \text{ tg } R_1}{\text{tg } R_2 - \text{tg } R_1}$$

$$Y = \frac{-X_2 + X_1 - Y_1 \text{ tg } R_1 + Y_2 \text{ tg } R_2}{\text{tg } R_2 - \text{tg } R_1}$$

7. Procédé selon les revendications 2 et 5 prises ensemble, caractérisé en ce que l'on génère le signal représentatif de l'angle de cap (Rm), en effectuant les opérations de calculs algébriques et trigonometriques suivantes sur les signaux représentatifs des coordonnées conventionnelles de la position calculée (X, Y) et du lieu de destination (x, y):

$$Rm = \left( \text{Arc tg } \frac{x - X}{y - Y} \right)^° + 90 \cdot \left[ 2 - \frac{x - X}{\sqrt{(x - X)^2}} \left( 1 + \frac{y - Y}{\sqrt{(y - Y)^2}} \right) \right]$$

8. Procédé selon les revendications 3 et 5 prises ensemble, caractérisé en ce que l'on génère le signal représentatif de la distance (D) séparant l'aéronef ou le navire de son lie de destination, en effectuant les opérations de calculs algebriques et trigonometriques suivantes sur les signaux sur les signaux représentatifs des coordonnées conventionnelles de la position calculée (X, Y) et du lieu de destination (x, y):

$$D = K \cdot \sqrt{(X - x)^2 + (Y - y)^2}$$

où K est un coefficient fonction de l'échelle de la carte géographique utilisée, de l'étalonnage du plateau de navigation et de l'unité de distance désirée.

9. Procédé selon la revendication 5, caractérisé en ce que la lecture des coordonnées conventionnelles d'un point sur le plateau consiste à faire coulisser un curseur mobile (6) portant un des axes gradués, parallèlement à un bord (5) du plateau portant l'autre axe gradué, en vue d'amener ledit curseur à passer par le point concerné et à lire une des coordonnées sur le curseur (6) au niveau du point concerné et l'autre sur le bord (5) du plateau au niveau du pied dudit curseur.

10. Procédé selon la revendication 5, caractérisé en ce que le repérage d'un point à partir de ses coordonnées conventionnelles consiste à faire coulisser un curseur mobile (6) portant un des axes gradués, parallèlement à un bord (5) du plateau portant l'autre axe gradué, en vue d'amener le pied dudit curseur sur la graduation correspondant à une des coordonnées conventionnelles, et à repérer le point, le long du curseur (6), en regard de la graduation correspondant à l'autre coordonnée conventionnelle.

11. Procédé selon l'une des revendications 1, 2, 3, 4, 5, 6, 7 ou 8 pour la navigation aérienne, dans lequel on utilise une carte aéronautique portant les stations radio-électriques »VOR« ou «NDB« de la zone couverte avec les fréquences correspondantes, on choisit sur la carte deux de ces stations radio-électriques et on mesure le relèvement ($R_1$, $R_2$) desdites stations à l'aide d'instruments de radio-navigation »VOR« ou »ADF« réglés sur la fréquence de ces deux stations.

12. Dispositif d'aide à la navigation en vue de la mise en oeuvre du procédé conforme à l'une des revendications précédentes, comportant un plateau dit plateau de navigation (2) pourvu de moyens de positionnement (3) d'une carte géographique (17, 18) et des moyens de calcul (10, 11, 12, 15, 16) adaptés pour effectuer des opérations de calculs algébriques et/ou trigonométriques, caractérisé en ce qu'il comprend:

— un système d'étalonnage dudit plateau (5, 6) permettant de repérer chacun de ses points par des coordonnées conventionnelles dans un système de référence lié audit plateau,
— un système d'entrée de données (9) comportant un clavier à touches et adapté pour permettre de générer des signaux électriques représentatifs de coordonnées conventionnelles et de relèvements et de transmettre ces signaux vers les moyens de calcul (10, 11, 12, 15) en vue d'élaborer des signaux électriques représentatifs des coordonnées conventionnelles d'une position (X, Y) et, le cas échéant, d'un angle de cap (Rm) et/ou d'une distance (D),
— et des moyens d'affichage (13, 14) pour la visualisation des résultats issus des moyens de calcul.

13. Dispositif selon la revendication 12, dans lequel le plateau de navigation (2) est de forme générale rectangulaire, caractérisé en ce que le système d'étalonnage est constitué par des graduations inscrites le long d'un bord (5) du plateau et par un curseur mobile (6) s'étendant perpendiculairement à ce bord et portant des graduations, ledit curseur (6) étant associé à des moyens de guidage en translation (7) adaptés pour permettre de le déplacer parallèlement au bord (5) précité sur toute la longueur de celui-ci.

14. Dispositif selon la revendication 13, caractérisé en ce que les graduations inscrites le long d'un bord (5) du plateau et le long du curseur (6) possèdent une échelle identique et sont adaptées pour permettre de représenter chaque point par deux coordonnées conventionnelles d'au plus quatra chiffres chacune.

15. Dispositif selon l'une des revendications 12, 13 ou 14, caractérisé en ce que les touches du clavier (9) sont marquées de signes d'identification de la nature des données à entrer (station 1: $X_1$ $Y_1$ $R_1$, station 2: $X_2$ $Y_2$ $R_2$, destination: x y) et d'indications numériques pour la composition des divers chiffres de chaque donnée.

16. Dispositif selon l'une des revendications 12, 13, 14 ou 15, dans lequel les moyens de calcul comprennent un micro-calculateur doté d'une unité de calcul (10), d'une mémoire morte (11) pour stocker un programme de calcul, d'une mémoire vive (12) pour stocker des données renouvelables, et d'interfaces (11, 16) interposées entre l'unité de calcul et les mémoires ou les moyens d'affichage.

17. Dispositif selon la revendication 16 pour la mise en oeuvre du procédé conforme à la revendication 6, dans lequel la mémoire morte (11) des moyens de calcul contient un programme en vue de l'exécution des calculs suivants:

$$X = \frac{tg\ R_1 \cdot tg\ R_2\ (Y_2 - Y_1) + X_1\ tg\ R_2 - X_2\ tg\ R_1}{tg\ R_2 - tg\ R_1}$$

$$Y = \frac{-X_2 + X_1 - Y_1\ tg\ R_1 + Y_2\ tg\ R_2}{tg\ R_2 - tg\ R_1}$$

18. Dispositif selon la revendication 17 pour la mise en oeuvre du procédé conforme à la revendication 7, dans lequel la mémoire morte (11) des moyens de calcul contient un programme en vue de l'exécution du calcul suivant:

$$Rm = \left[ Arc\ tg\ \frac{x - X}{y - Y} \right]^{\circ} + 90 \cdot \left[ 2 - \frac{x - X}{\sqrt{(x - X)^2}} \left( 1 + \frac{y - Y}{\sqrt{(y - Y)^2}} \right) \right]$$

19. Dispositif selon la revendication 17 pour la mise en oeuvre du procédé conforme à la revendication 8, dans lequel la mémoire morte (11) des moyens de calcul contient un programme en vue de l'exécution du calcul suivant:

$$D = K \cdot \sqrt{(X - x)^2 + (Y - y)^2}$$

20. Dispositif selon l'une des revendications 12, 13, 14, 15, 16, 17, 18 ou 19, dans lequel les moyens d'affichage sont composés de plusieurs afficheurs à segments (13) et de moyens d'indication (14) du type d'information affichée (X, Y, Rm, D).

21. Dispositif selon la revendication 15, caractérisé en ce que le plateau de navigation (2) se prolonge, sur un côté (4), par un boîtier de faible épaisseur supportant le clavier du système d'entrée (9) et les moyens d'affichage (13, 14), les moyens de calcul étant logés dans ledit boîtier.

22. Dispositif selon l'une des revendications 12, 13, 14, 15, 16, 17, 18, 19, 20 ou 21, caractérisé en ce que les moyens de positionnement de la carte géographique (17, 18) sont constitués par une bordure périphérique (3) du plateau, située légèrement en saillie de façon à délimiter un logement pour ladite carte.

23. Dispositif selon l'un de revendications 12, 13, 14, 15, 16, 17, 18, 19, 20, 21 ou 22, caractérisé en ce qu'il comprend un jeu de cartes (17, 18) couvrant un territoire déterminé, chacune étant découpée pour présenter une forme adaptée à celle du plateau de navigation (2) et portant les stations de repérage de la région qu'elle couvre, avec leurs caractéristiques.

24. Dispositif selon la revendication 23 pour la navigation aérienne, caractérisé en ce que chaque carte (17) porte, d'une part, les stations de radio-navigation de la région qu'lle couvre avec l'indication, pour chaque station, de sa fréquence et de ses coordonnées conventionnelles dans le système de référence du dispositif, d'autre part, les aérodromes avec l'indication de leurs coordonnées conventionnelles dans ce système de référence.

25. Dispositif selon la revendication 24, caractérisé en ce que chaque carte (17) comporte une marge périphérique (17b) dans laquelle sont notées les stations de radio-navigation proches de la région couverte par la carte, avec leur fréquence et leurs coordonnées conventionnelles dans le système de référence du dispositif.

26. Dispositif selon l'une des revendications 24 ou 25, caractérisé en ce qu'il comprend des cartes (18) à échelle plus grande, couvrant les zones proches des aérodromes, chaque carte (18) portant les coordonnées conventionnelles de l'aérodrome concerné et la trajectoire recommandée d'arrivée ou d'approche dudit aérodrome.

27. Dispositif selon l'une des revendications 12, 13, 14, 15, 16, 17, 18, 19, 20, 21, 22, 23, 24, 25 ou 26, comprenant des moyens d'alimentation électrique autonomes.

## Patentansprüche

1. Verfahren zur Luftfahrt- und Schiffahrt-Navigation, welches es ermöglicht, als Hilfsmittel für die Navigation geeignete Informationen hinsichtlich der Position eines Flugzeugs oder eines Schiffs aus mittels geeigneter Navigationsgeräte bezüglich Ortungsstationen genommenen Orientierungen (R) auszuarbeiten und anzugeben, insbesondere mittels Radio-Navigationsgeräte genommenen Orientierungen von Radio-Navigations-Stationen, wobei besagtes Verfahren ein Brett (2), ein sog. Navigationsbrett, verwendet, auf welches eine Land- oder Seekarte (17, 18), welche der betreffenden Navigationsgegend entspricht, gelegt ist, wobei besagte Karte eine Angabe über die Ortungsstationen auf der von ihr erfaßten Fläche aufweist, wobei besagtes Verfahren dadurch gekennzeichnet ist, daß es darin besteht, daß man

— das Navigationsbrett (2) so graduiert, daß jeder Punkt des Bretts durch konventionelle Koordinaten in einem mit besagtem Brett verbundenen Bezugssystem geortet wird;
— auf der am Brett festgemachten Karte zwei Ortungsstationen auswählt und die konventionellen Koordinaten $(X_1, Y_1; X_2, Y_2)$ dieser beiden Ortungsstationen im Bezugssystem, in welchem das Brett graduiert ist, abliest;
— eine Dateneingabe-Tastatur (9) manuell betätigt, welche eine Mehrzahl von Tasten umfaßt, um elektrische Signale, welche diese konventionellen Koordinaten $(X_1, Y_1; X_2, Y_2)$ darstellen, zu erzeugen, und besagte Signale in (12) speichert;
— die Orientierungen $(R_1, R_2)$ dieser beiden Ortungsstationen mittels geeigneter Navigationsgeräte mißt und abliest;
— die Dateneingabe-Tastatur (9) manuell betätigt, um elektrische Signale, welche diese Orientierungen $(R_1, R_2)$ darstellen, zu erzeugen, und diese Signale in (12) speichert;
— aus den elektrischen Signalen, welche die konventionellen Koordinaten $(X_1, Y_1; X_2, Y_2)$ der beiden Ortungsstationen und die gemessenen Orientierungen $(R_1, R_2)$ darstellen, elektrische Signale erzeugte, welche die konventionellen Koordinaten $(X, Y)$ der Position des Flugzeugs oder Schiffs in dem mit dem Navigationsbrett verbundenen Bezugssystem darstellen;
— besagte konventionelle Koordinaten $(X, Y)$ in (13, 14) aufzeigt und auf der am Navigationsbrett festgemachten Karte die Position des Flugzeugs oder Schiffs mittels besagter konventioneller Koordinaten und des mit dem Brett verbundenen Bezugssystems markiert.

2. Verfahren nach Anspruch 1, welches es ermöglicht, Informationen hinsichtlich der zu nehmenden Richtung (Rm) auszuarbeiten und anzugeben, um einen gegebenen Bestimmungsort zu erreichen, dadurch gekennzeichnet, daß es darin besteht, daß man

— auf dem Brett die konventionellen Koordinaten $(x, y)$ des Bestimmungsorts abliest;
— elektrische Signale, welche diese Koordinaten $(x, y)$ darstellen, durch (9) erzeugt und besagte Signale in (12) speichert;
— aus den Signalen, welche die konventionellen Koordinaten der beiden Ortungsstationen $(X_1, Y_1; X_2, Y_2)$ des Bestimmungsorts $(x, y)$ und der gemessenen Orientierungen $(R_1, R_2)$ darstellen, ein elektrisches Signal erzeugt, welches den zu folgenden Kurs (Rm) darstellt;
— besagten Kurs in (13, 14) aufzeigt.

3. Verfahren nach einem der Ansprüche 1 oder 2, welches es ermöglicht, Informationen hinsichtlich des Abstands (D) zwischen dem Flugzeug oder Schiff und einem gegebenen Bestimmungsort auszuarbeiten und anzugeben, dadurch gekennzeichnet, daß es darin besteht, daß man

— auf dem Brett die konventionellen Koordinaten (x, y) des Bestimmungsorts abliest;
— elektrische Signale, welche diese Koordinaten (x, y) darstellen, durch (9) erzeugt und diese Signale in (12) speichert;
— aus den Signalen, welche die konventionellen Koordinaten $(X_1, Y_1; X_2, Y_2)$ der beiden Ortungsstationen, des Bestimmungsorts (x, y) und der gemessenen Orientierungen $(R_1, R_2)$ darstellen, ein elektrisches Signal erzeugt, welches den Abstand (D) zwischen dem Flugzeug oder Schiff und dem Bestimmungsort darstellt;
— besagten Abstand in (13, 14) aufzeigt.

4. Verfahren nach den Ansprüchen 1, 2 und 3 zusammen, welches es ermöglicht, für die Luftfahrt-Navigation Informationen hinsichtlich der Richtung (r) und der Geschwindigkeit (v) des wahren Windes auszuarbeiten und anzugeben, dadurch gekennzeichnet, daß es darin besteht, daß man

— auf der Geraden der errechneten Orientierung (Rm) einen Zwischen-Bestimmungsort $(x_i, y_i)$ auswählt, welcher einer aus der Position des Flugzeugs (X, Y) bekannten Fahrzeitspanne (t) entspricht;
— am Ende dieser Zeitspanne (t) erneut Messungen durchführt, um so elektrische Signale zu erzeugen, welche die neue Position des Flugzeugs (X', Y'), die neue Orientierung (R'm) des Zwischen-Bestimmungsorts $(x_i, y_i)$ und den Abstand (D') dieses Bestimmungsorts bezüglich der neuen Position darstellen;
— ein Signal, welches die Zeitspanne (t) darstellt, erzeugt und algebraische und trigonometrische Arbeitsgänge bei den vorgenannten Signalen durchführt, um Signale zu erzeugen, welche die Windrichtung (r = R'm ± 180°) und die Windgeschwindigkeit ($v = \dfrac{D'}{t} \cdot k$, wobei k ein von den Einheiten abhängiger Faktor ist),
darstellen;
— diese Richtung (r) und diese Geschwindigkeit (v) in (13, 14) aufzeigt.

5. Verfahren nach einem der Ansprüche 1, 2, 3 oder 4, dadurch gekennzeichnet, daß man das Navigationsbrett (2) mit etwa rechteckiger Form auf zwei gegeneinander senkrecht liegenden Achsen graduiert, wobei die Achsen jeweils parallel zu einer Kante des Bretts liegen und von einem Koordinaten-Nullpunkt aus graduiert sind.

6. Verfahren nach den Ansprüchen 1 und 5 zusammen, dadurch gekennzeichnet, daß man die Signale, welche die Koordinaten (X, Y) der Position des Flugzeugs oder Schiffs darstellen, dadurch erzeugt, daß man folgende algebraische und trigonometrische Rechenvorgänge bei den Signalen durchführt, welche die konventionellen Koordinaten der beiden Ortungsstationen $(X_1, Y_1; X_2, Y_2)$ und der gemessenen Orientierungen $(R_1, R_2)$ darstellen:

$$X = \frac{\operatorname{tg} R_1 \cdot \operatorname{tg} R_2\,(Y_2 - Y_1) + X_1 \operatorname{tg} R_2 - X_2 \operatorname{tg} R_1}{\operatorname{tg} R_2 - \operatorname{tg} R_1}$$

$$Y = \frac{-X_2 + X_1 - Y_1 \operatorname{tg} R_1 + Y_2 \operatorname{tg} R_2}{\operatorname{tg} R_2 - \operatorname{tg} R_1}$$

7. Verfahren nach den Ansprüchen 2 und 5 zusammen, dadurch gekennzeichnet, daß man das Signal, welches den Kurs (Rm) darstellt, dadurch erzeugt, daß man folgende algebraische und trigonometrische Rechenvorgänge bei den Signalen durchführt, welche die konventionellen Koordinaten der errechneten Position (X, Y) und des Bestimmungsorts (x, y) darstellen:

$$Rm = \left( \operatorname{arc\ tg} \frac{x - X}{y - Y} \right)^\circ + 90 \cdot \left[ 2 - \frac{x - X}{\sqrt{(x - X)^2}} \left( 1 + \frac{y - Y}{\sqrt{(y - Y)^2}} \right) \right]$$

8. Verfahren nach den Ansprüchen 3 und 5 zusammen, dadurch gekennzeichnet, daß man das Signal, welches den Abstand (D) zwischen dem Flugzeug oder Schiff und seinem Bestimmungsort darstellt, dadurch erzeugt, daß man folgende algebraische und trigonometrische Rechenvorgänge bei den Signalen durchführt, welche die konventionellen Koordinaten der errechneten Position (X, Y) und des Bestimmungsorts (x, y) darstellen:

$$D = K \cdot \sqrt{(X - x)^2 + (Y - y)^2},$$

wobei K ein von der Skala der verwendeten Land- oder Seekarte, der Graduierung des Navigationsbretts und der gewünschten Abstandseinheit abhängiger Faktor ist.

9. Verfahren nach Anspruch 5, dadurch gekennzeichnet, daß das Ablesen der konventionellen Koordinaten eines auf dem Brett gelegenen Punktes darin besteht, daß man einen eine der graduierten Achsen aufweisenden beweglichen Läufer (6) parallel zu einer Kante (5) des die andere graduierte Achse aufweisenden Bretts gleiten läßt, um besagten Läufer so durch den betreffenden Punkt laufen zu lassen, und eine der Koordinaten auf dem Läufer (6) auf der Höhe des betreffenden Punkts und die andere auf der Kante (5) des Bretts auf der Höhe des Fußes des besagten Läufers abliest.

10. Verfahren nach Anspruch 5, dadurch gekennzeichnet, daß die Ortung eines Punkts aus seinen konventionellen Koordinaten darin besteht, daß man einen eine der graduierten Achsen aufweisenden beweglichen Läufer (6) parallel zu einer Kante (5) des die andere graduierte Achse aufweisenden Bretts gleiten läßt, um den Fuß des besagten Läufers auf die einer der konventionellen Koordinaten entsprechenden Graduierung zu bringen, und den Punkt am Läufer (6) entlang gegen die der anderen konventionellen Koordinate entsprechenden Graduierung ortet.

11. Verfahren nach einem der Ansprüche 1, 2, 3, 4, 5, 6, 7 oder 8 zur Luftfahrt-Navigation, bei welchem man eine Luftfahrtskarte verwendet, welche die »VOR« (VHF Omni Range)- oder »NDB« (non-directional beacon)-radio-elektrischen Stationen des mit den entsprechenden Frequenzen erfaßten Gebiets aufweist, auf der Karte zwei dieser radio-elektrischen Stationen auswählt und die Orientierung ($R_1$, $R_2$) besagter Stationen mit Hilfe von »VOR«- oder »ADF« (automatic direction finder)-Radionavigations-Geräten, welche auf die Frequenz dieser beiden Stationen abgestimmt sind, mißt.

12. Navigations-Hilfsvorrichtung zur Durchführung des Verfahrens gemäß einem der vorangehenden Ansprüche, welche ein Brett, ein sog. Navigationsbrett (2) mit Plaziermitteln (3) für eine Land- oder Seekarte (17, 18) sowie zur Durchführung algebraischer und/oder trigonometrischer Rechenvorgänge geeignete Rechenmittel (10, 11, 12, 15, 16) aufweist, dadurch gekennzeichnet, daß sie

— eine Graduier-Einrichtung (5, 6) für besagtes Brett, welche es ermöglicht, seine Punkte jeweils durch konventionelle Koordinaten in einem mit dem Brett verbundenen Bezugssystem zu orten,
— eine Dateneingabe-Einrichtung (9), welche eine Tastatur aufweist und dazu befähigt ist, elektrische Signale, welche konventionelle Koordinaten und Orientierungen darstellen, erzeugen zu lassen und diese Signale an die Rechenmittel (10, 11, 12, 15) weiterzuleiten, um elektrische Signale, welche die konventionellen Koordinaten einer Position (X, Y) und gegebenenfalls eines Kurses (Rm) und/oder eines Abstands (D) darstellen, auszuarbeiten, und
— Aufzeigemittel (13, 14) zur Sichtbarmachung der aus den Rechenmitteln hervorgehenden Ergebnisse umfaßt.

13. Vorrichtung nach Anspruch 12, bei welcher das Navigationsbrett (2) eine allgemein rechteckige Form aufweist, dadurch gekennzeichnet, daß die Graduier-Einrichtung aus entlang einer Kante (5) des Bretts markierten Graduierungen und einem sich senkrecht zu dieser Kante erstreckenden und Graduierungen aufweisenden beweglichen Läufer (6) besteht, wobei besagter Läufer (6) Translationsführungsmitteln (7) zugeordnet ist, welche dazu befähigt sind, ihn parallel zur vorgenannten Kante (5) über die gesamte Länge des letzteren schieben zu lassen.

14. Vorrichtung nach Anspruch 13, dadurch gekennzeichnet, daß die entlang einer Kante (5) des Bretts und entlang des Läufers (6) markierten Graduierungen gleiche Maßeinteilung aufweisen und dazu befähigt sind, die Punkte jeweils durch zwei konventionelle, höchstens vierstellige Koordinaten darstellen zu lassen.

15. Vorrichtung nach einem der Ansprüche 12, 13 oder 14, dadurch gekennzeichnet, daß die Tasten der Tastatur (9) mit Erkennungszeichen für die Art der einzutragenden Daten (Station 1: $X_1$ $Y_1$ $R_1$, Station 2: $X_2$ $Y_2$ $R_2$, Bestimmungsort: x y) sowie mit Zahlenangaben über die Zusammensetzung der verschiedenen Ziffern der jeweiligen Daten markiert sind.

16. Vorrichtung nach einem der Ansprüche 12, 13, 14 oder 15, bei welcher die Rechenmittel einen Kleinrechner umfassen, welcher mit einer Recheneinheit (10), einem Festspeicher (11) zum Speichern eines Rechenprogramms, einem RAM-Speicher (Speicher mit wahlweisem Zugriff) (12) zum Speichern der erneuerbaren Daten und mit zwischen der Recheneinheit und den Speichern oder den Aufzeigemitteln angeordneten Grenzflächen (11, 16) ausgestattet ist.

17. Vorrichtung nach Anspruch 16 zur Durchführung des Verfahrens gemäß Anspruch 6, bei welcher der Festspeicher (11) der Rechenmittel ein Programm zur Ausführung folgender Ausrechnungen enthält:

$$X = \frac{\text{tg } R_1 \cdot \text{tg } R_2 \, (Y_2 - Y_1) + X_1 \, \text{tg } R_2 - X_2 \, \text{tg } R_1}{\text{tg } R_2 - \text{tg } R_1}$$

$$Y = \frac{-X_2 + X_1 - Y_1 \, \text{tg } R_1 + Y_2 \, \text{tg } R_2}{\text{tg } R_2 - \text{tg } R_1}$$

18. Vorrichtung nach Anspruch 17 zur Durchführung des Verfahrens gemäß Anspruch 7, bei welcher

0 057 032

der Festspeicher (11) der Rechenmittel ein Programm zur Ausführung der folgenden Ausrechnung enthält:

$$Rm = \left[ arc\ tg\ \frac{x-X}{y-Y} \right]^o + 90 \cdot \left[ 2 - \frac{x-X}{\sqrt{(x-X)^2}} \left( 1 + \frac{y-Y}{\sqrt{(y-Y)^2}} \right) \right]$$

19. Vorrichtung nach Anspruch 17 zur Durchführung des Verfahrens gemäß Anspruch 8, bei welcher der Festspeicher (11) der Rechenmittel ein Programm zur Ausführung der folgenden Ausrechnung enthält:

$$D = K \cdot \sqrt{(X-x)^2 + (Y-y)^2}.$$

20. Vorrichtung nach einem der Ansprüche 12, 13, 14, 15, 16, 17, 18 oder 19, bei welcher die Aufzeigemittel sich aus mehreren stückweisen Aufzeige-Vorrichtungen (13) und Anzeigemitteln (14) des Informationsaufzeige-Typs (X, Y, Rm, D) zusammensetzen.

21. Vorrichtung nach Anspruch 15, dadurch gekennzeichnet, daß das Navigationsbrett (2) sich auf einer Seite (4) in einem Gehäuse geringer Dicke verlängert, welches die Tastatur der Eingabe-Einrichtung (9) und die Anzeigemittel (13, 14) stützt, wobei die Rechenmittel in besagtem Gehäuse untergebracht sind.

22. Vorrichtung nach einem der Ansprüche 12, 13, 14, 15, 16, 17, 18, 19, 20 oder 21, dadurch gekennzeichnet, daß die Plaziermittel für die Land- oder Seekarte (17, 18) aus einem Umfangsrand (3) bestehen, welcher etwas herausragt, um so ein Gehäuse für besagte Karte zu begrenzen.

23. Vorrichtung nach einem der Ansprüche 12, 13, 14, 15, 16, 17, 18, 19, 20, 21 oder 22, dadurch gekennzeichnet, daß sie einen Satz Karten (17, 18) umfaßt, welcher ein bestimmtes Gebiet erfaßt, wobei die Karten jeweils so ausgeschnitten sind, daß sie eine dem Navigationsbrett (2) angepaßte Form besitzen und die Ortungsstationen des von ihnen erfaßten Gebiets mit ihren Merkmalen aufweisen.

24. Vorrichtung nach Anspruch 23 zur Luftfahrt-Navigation, dadurch gekennzeichnet, daß jede Karte (17) einerseits die Radio-Navigationsstationen des von ihr erfaßten Gebiets mit Angabe bei der jeweiligen Station über ihre Frequenz und ihre konventionellen Koordinaten im Bezugssystem der Vorrichtung und andererseits die Flughäfen mit Angabe ihrer konventionellen Koordinaten in diesem Bezugssystem aufweist.

25. Vorrichtung nach Anspruch 24, dadurch gekennzeichnet, daß jede Karte (17) einen Umfangskranz (17b) umfaßt, in welchem die in der Nähe des von der Karte erfaßten Gebiets gelegenen Radio-Navigationsstationen mit ihrer Frequenz und ihren konventionellen Koordinaten im Bezugssystem der Vorrichtung eingezeichnet sind.

26. Vorrichtung nach einem der Ansprüche 24 oder 25, dadurch gekennzeichnet, daß sie Karten größeren Maßstabs umfaßt, welche die in der Nähe von Flughäfen gelegenen Gebiete erfaßt, wobei jede Karte (18) die konventionellen Koordinaten des betreffenden Flughafens und die empfohlene Ankunfts- oder Einflugsschneise des besagten Flughafens aufweist.

27. Vorrichtung nach einem der Ansprüche 12, 13, 14, 15, 16, 17, 18, 19, 20, 21, 22, 23, 24, 25 oder 26, welche unabhängige Elektrizitätsversorgungsmittel umfaßt.

**Claims**

1. Process for aerial or high seas navigation, enabling information assisting navigation and relating to the position of an aircraft or a ship to be worked out and issued from bearings (R) taken relative to location posts by means of suitable navigation instruments, particularly bearings of radio-navigation posts taken by means of radio-navigation instruments, said process using a board (2), a so-called navigation board, on which a map or chart (17, 18), corresponding to the navigation region in question, is placed, said map or chart possessing an indication of the location posts existing in the area it covers, said process being characterised in that it consists in

— graduating the navigation board (2), so as to locate each point of the board by means of conventional coordinates in a reference system joined to said board;
— selecting on the map or chart, fixid to the board, two location posts and reading off the conventional coordinates $(X_1, Y_1; X_2, Y_2)$ of these two location posts in the reference system in which the board is graduated;
— actuating by hand a data input keyboard (9), comprising a plurality of keys for generating electrical signals representing these conventional coordinates $(X_1, Y_1; X_2, Y_2)$, and storing said signals in (12);
— measuring and reading off the bearings $(R_1, R_2)$ of these two location posts by means of suitable navigation instruments;

15

- actuating by hand the data input keyboard (9) for generating electrical signals representing these bearings ($R_1$, $R_2$) and storing these signals in (12);
- generating from these electrical signals, representing the conventional coordinates ($X_1$, $Y_1$; $X_2$, $Y_2$) of the two location posts and the measured bearings ($R_1$, $R_2$), electrical signals representing the conventional coordinates (X, Y) of the position of the aircraft or ship in the reference system joined to the navigation board; and
- displaying said conventional coordinates (X, Y) in (13, 14) and marking on the map or chart, fixed to the navigation board, the position of the aircraft or ship by means of the conventional coordinates and of the reference system joined to the board.

2. Process according to Claim 1, enabling information concerning the course to be taken (Rm) to be worked out and issued, in order to reach a given destination, characterised in that it consists in

- reading off on the board the conventional coordinates (x, y) of the destination;
- generating by means of (9) electrical signals representing these coordinates (x, y) and storing said signals in (12);
- generating from the signals representing the conventional coordinates of the two location posts ($X_1$, $Y_1$; $X_2$, $Y_2$), of the destination (x, y) and of the measured bearings ($R_1$, $R_2$) an electrical signal representing the track course to be followed (Rm); and
- displaying said track course in (13, 14).

3. Process according to either Claim 1 or 2, enabling information concerning the distance (D) between the aircraft por ship and a given destination to be worked out and issued, characterised in that it consists in

- reading off on the board the conventional coordinates (x, y) of the destination;
- generating by means of (9) electrical signals representing these coordinates (x, y) and storing said signals in (12);
- generating from the signals, representing the conventional coordinates ($X_1$, $Y_1$; $X_2$, $Y_2$) of the two location posts, of the destination (x, y) and of the measured bearings ($R_1$, $R_2$) an electrical signal representing the distance (D) between the aircraft or ship and the destination;
- displaying said distance in (13, 14).

4. Process according to Claims 1, 2 and 3, taken together, enabling information concerning the direction (r) and the velocity (v) of the real wind to be worked out and issued for aerial navigation, characterised in that it consists in

- selecting on the straight line of the calculated bearings (Rm) an intermediate destination ($x_i$, $y_i$), corresponding to a journey time (t) known from the position of the aircraft (X, Y);
- carrying out fresh measurements at the end of this period (t), so as to generate electrical signals representing the new position of the aircraft (X', Y') of the new bearings (R'm) of the intermediate destination ($x_i$, $y_i$) and of the distance (D') of this destination relative to the new position;
- generating a signal representing the time (t) and carrying out algebraic and trigonometric operations on the above-mentioned signals, in order to generate signals representing the direction of the wind ($r = R'm \pm 180°$) and the velocity of the wind ($v = \dfrac{D'}{t} \cdot k$, where k is a factor depending on the units);
- displaying this direction (r) and this velocity (v) in (13, 14).

5. Process according to one of the Claims 1, 2, 3 or 4, characterised in that the navigation board (2), having approximately rectangular shape, is graduated on two axes running at right angles to each other, each axis being parallel to an edge of the board and graduated from an origin.

6. Process according to Claims 1 and 5, taken together, characterised in that the signals representing the coordinates (X, Y) of the position of the aircraft or ship are generated by carrying out the following algebraic and trigonometric calculations on the signals representing the conventional coordinates of the two location posts ($X_1$, $Y_1$; $X_2$, $Y_2$) and of the measured bearings ($R_1$, $R_2$):

$$X = \frac{\tan R_1 \cdot \tan R_2\,(Y_2 - Y_1) + X_1 \tan R_2 - X_2 \tan R_1}{\tan R_2 - \tan R_1}$$

$$Y = \frac{-X_2 + X_1 - Y_1 \tan R_1 + Y_2 \tan R_2}{\tan R_2 - \tan R_1}$$

7. Process according to Claims 2 and 5, taken together, characterised in that the signal representing the track course (Rm) is generated by carrying out the following algebraic and trigonometric calculations on the signals representing the conventional coordinates of the calculated position (X, Y) and of the destination (x, y):

$$Rm = \left(\arctan\frac{x-X}{y-Y}\right)^{\circ} + 90 \cdot \left[2 - \frac{x-X}{\sqrt{(x-X)^2}}\left(1 + \frac{y-Y}{\sqrt{(y-Y)^2}}\right)\right]$$

8. Process according to Claims 3 and 5 taken together, characterised in that the signal representing the distance (D) between the aircraft or ship and its destination is generated by carrying out the following algebraic and trigonometric calculations on the signals representing the conventional coordinates of the calculated position (X, Y) and of the destination (x, y):

$$D = K \cdot \sqrt{(X-x)^2 + (Y-y)^2},$$

where K is a factor depending on the scale of the map or chart used, of the graduation of the navigation board and of the unit of distance desired.

9. Process according to Claim 5, characterised in that the reading of the conventional coordinates of a point on the board consists in shifting a movable slide (6), carrying one of the graduated axes, parallel to an edge (5) of the board which carries the other graduated axis, so as to let said slide pass through the point in question, and reading off one of the coordinates on the slide (6) at the level of the point in question and the other on the edge (5) of the board at the level of the base of said slide.

10. Process according to Claim 5, characterised in that the location of a point from its conventional coordinates consists in shifting a movable slide (6), carrying one of the graduated axes, parallel to an edge (5) of the board which carries the other graduated axis, so as to take the base of said slide onto the graduation corresponding to one of the conventional coordinates, and locating the point along the slide (6) against the graduation corresponding to the other conventional coordinate.

11. Process according to one of the Claims 1, 2, 3, 4, 5, 6, 7 or 8 for aerial navigation, in which an aeronautical chart which includes the »VOR« (VHF Omni Range) or »NDB« (non-directional beacon) radio-electric posts of the zone covered with the corresponding frequencies is used, two of these radio-electric posts are selected on the chart and the bearings ($R_1$, $R_2$) of said posts are measured with the aid of »VOR« or »ADF« (automatic direction finder) radio-navigation instruments, adjusted to the frequency of these two posts.

12. Navigational aid device for carrying out the process in accordance with one of the preceding claims, comprising a board, a so-called navigation board (2), provided with means for positioning (3) a map or chart (17, 18) and calculation means (10, 11, 12, 15, 16), capable of carrying out algebraic and/or trigonometric calculations, characterised in that it comprises

— a graduation system (5, 6) for said board, enabling each of its points to be located by means of conventional coordinates in a reference system joined to said board;
— a data input system (9), comprising a keyboard and designed for enabling electrical signals representing conventional coordinates and bearings to be generated and for these signals to be transmitted toward the calculation means (10, 11, 12, 15) for working out electrical signals representing the conventional coordinates of a position (X, Y) and, if required, of a track course (Rm) and/or of a distance (D); and
— display means (13, 14) for the visualisation of the results emerging from the calculation means.

13. Device according to Claim 12 in which the navigation board (2) has a rectangular general shape, characterised in that the graduation system consists of graduations marked along an edge (5) of the board and of a movable slide (6), extending at right angles to this edge and carrying graduations, said slide (6) being associated with translation guide means (7), designed for enabling it to be moved parallel to the above-mentioned edge (5) along the whole length of the latter.

14. Device according to Claim 13, characterised in that the graduations marked along an edge (5) of the board and along the slide (6) have an identical scale and are designed for enabling each point to be represented by two conventional coordinates of, at most, for digits each.

15. Device according to one of the Claims 12, 13 or 14, characterised in that the keys of the keyboard (6) are marked with signs identifying the nature of the data to be entered, (post 1: $X_1$ $Y_1$ $R_1$; post 2: $X_2$ $Y_2$ $R_2$; destination: x y,) and with numerical indications of the make-up of the various figures of each of the data.

16. Device according to one of the Claims 12, 13, 14 or 15 in which the calculation means comprise a microcalculator, provided with a calculation unit (10), a fixed storage (read-only memory) (11) for storing a calculation programme, a random access memory (12) for storing renewable data and interfaces (11, 16), placed between the calculation unit and the memories or the display means.

17. Device according to Claim 16 for carrying out the process in accordance with Claim 6, in which the fixed storage (11) of the calculation means contains a programme for performing the following calculations:

$$X = \frac{\tan R_1 \cdot \tan R_2 \,(Y_2-Y_1)+X_1 \tan R_2-X_2 \tan R_1}{\tan R_2-\tan R_1}$$

$$Y = \frac{-X_2+X_1-Y_1 \tan R_1+Y_2 \tan R_2}{\tan R_2-\tan R_1}$$

18. Device according to Claim 17 for carrying out the process in accordance with Claim 7, in which the fixed storage (11) of the calculation means contains a programme for performing the following calculation:

$$Rm = \left[ \arctan \frac{x-X}{y-Y} \right]^{\circ} + 90 \cdot \left[ 2 - \frac{x-X}{\sqrt{(x-X)^2}} \left( 1 + \frac{y-Y}{\sqrt{(y-Y)^2}} \right) \right]$$

19. Devise according to Claim 17 for carrying out the process in accordance with Claim 8, in which the fixed storage (11) of the calculation means contains a programme for performing the following calculation:

$$D = K \cdot \sqrt{(X-x)^2+(Y-y)^2}.$$

20. Device according to one of the Claims 12, 13, 14, 15, 16, 17, 18 or 19 in which the display means consist of several sectional display devices (13) and indicator means (14) of the displayed information type (X, Y, Rm, D).

21. Device according to Claims 15, characterised in that the navigation board (2) extends on one side (4) in a casing of low thickness, supporting the keyboard of the input system (9) and the display means (13, 14), the calculation means being accommodated in said casing.

22. Device according to one of the Claims 12, 13, 14, 15, 16, 17, 18, 19, 20 or 21, characterised in that the positioning means for the map or chart (17, 18) consist of a peripheral border (3) of the board, projecting slightly, so as to delimit a housing for said map or chart.

23. Device according to one of the Claims 12, 13, 14, 15, 16, 17, 18, 19, 20, 21 or 22, characterised in that it comprises a set of maps or charts (17, 18), covering a definite territory, each being cut out so as to have a shape adapted to that of the navigation board (2) and including the location posts of the region it covers, with their characteristics.

24. Device according to Claim 23 for aerial navigation, characterised in that each map or chart (17) includes, on the one hand, the radio-navigation posts of the region it covers, with an indication, for each post, of its frequency and its conventional coordinates in the reference system of the device and, on the other hand, the airports, with an indication of their conventional coordinates in this reference system.

25. Device according to Claim 24, characterised in that each map or chart (17) comprises a peripheral rim (17b) in which the radio-navigation posts close to the region covered by the map or chart are entered with their frequency and their conventional coordinates in the reference system of the device.

26 Device according to either Claim 24 or 25, characterised in that it comprises larger scale maps or charts (18), covering the zones close to the airports, each map or chart (18) including the conventional coordinates of the airport in question and the recommended arrival or approach flightpath for said airport.

27. Device according to one of the Claims 12, 13, 14, 15, 16, 17, 18, 19, 20, 21, 22, 23, 24, 25 or 26, comprising independent electricity supply means.

Fig. 1

0 057 032

Fig. 2

6  6a  B

7

Fig. 3

6

8  7

6a

Fig. 4

16

14

DECODEUR

| Calc. | X | Y | Rm | D | Vp | Y | r | Vs | Tr | d |
|-------|---|---|----|---|----|---|---|----|----|---|
| ○ | ○ | ○ | ○ | ○ | ○ | ○ | ○ | ○ | ○ | ○ |

13

MICRO - PROCESSEUR  10

12

15  MULTIPLEXEURS  →  MEMOIRE VIVE

MEMOIRE MORTE  11

ENTREE  9

Fig. 5

Fig. 6